# FASCICULE DE BREVET EUROPEEN

(11) **EP 1 683 414 B1**
(45) Date de publication et mention de la délivrance du brevet: **29.12.2010**
(21) Numéro de dépôt: 06100196.2
(22) Date de dépôt: 10.01.2006
(51) Int. Cl.: A01M 7/00

(54) **Dispositif de suspension pour une rampe d'un pulvérisateur agricole**
Verteilrampeaufhängung einer Feldspritze
Boom suspension device for a field sprayer

(30) Priorité: 20.01.2005 FR 0550164
(43) Date de publication de la demande: 26.07.2006
(73) Titulaire: KUHN S.A., 67700 Saverne (FR)
(72) Inventeur: ROGER, Fabien, 77710, LORREZ LE BOCAGE (FR); REINE, Cyrille, 77480, VILLUIS (FR); VUILLIN, Michel, 77250, VENEUX-LES-SABLONS (FR); FRUMHOLTZ, Johnny, 77780, BOURRON MARLOTTE (FR); VIRIAT, Laurent, 77130, VILLE SAINT JACQUES (FR)
(74) Mandataire: Andres, Jean-Claude

(56) Documents cités:
- FR-A- 2 433 892
- FR-A- 2 520 586
- FR-A- 2 559 685

## Description

La présente invention se rapporte au domaine technique des appareils agricoles de pulvérisation portés, tractés ou automoteurs. Elle concerne plus particulièrement un dispositif de suspension pour une rampe d'un appareil agricole d'épandage de produits destiné à être monté sur un châssis, ledit dispositif de suspension comportant deux bielles permettant de suspendre ladite rampe audit châssis, ladite rampe comportant un cadre central sur lequel est lié au moins un bras latéral de rampe.

Un tel dispositif de suspension équipant une rampe d'épandage est connu de l'homme du métier, notamment par le document FR 2 520 586. Ce document décrit un dispositif de suspension pour une rampe d'un appareil d'épandage de produits destiné à être monté sur un châssis. La rampe comporte un cadre central sur lequel est lié au moins un bras latéral. Le dispositif de suspension comporte une rotule permettant de suspendre la rampe au châssis. La rampe est maintenue à une certaine distance du châssis dans sa partie supérieure par l'intermédiaire de la potence et dans sa partie inférieure par l'intermédiaire de deux galets. La partie inférieure de la rampe est appuyée contre les deux galets au moyen d'une liaison élastique.

Le dispositif de suspension permet d'absorber les mouvements de lacet de la rampe. En effet, lorsque l'appareil d'épandage avec son essieu et son bâti pivote autour de l'axe vertical, le châssis effectue le même pivotement car il est solidaire du bâti par l'intermédiaire des montants. Par contre par son inertie, la rampe reste perpendiculaire à la direction d'avance initiale du véhicule, si bien qu'un des galets cesse d'être en contact avec sa surface de roulement. Selon les propriétés de la liaison élastique, la rampe est ramenée plus ou moins rapidement contre les galets pour être à nouveau parallèle au châssis.

Le document FR 2 433 892 décrit également un dispositif de suspension comportant un système de bielles qui permet de suspendre le cadre central de la rampe d'épandage au châssis d'un appareil de pulvérisation. Le système de bielles est multidirectionnel, il comporte au moins deux bielles inclinées pour absorber les oscillations de la rampe autour d'un axe de rotation horizontal, appelé aussi mouvement de roulis de la rampe de pulvérisation. Les deux bielles inclinées permettent de suspendre la rampe au châssis de l'appareil de pulvérisation.

Pour maintenir ladite rampe dans un plan sensiblement parallèle au châssis, le dispositif de suspension comporte quatre entretoises. Deux entretoises horizontales de longueur fixe maintiennent le cadre central de la rampe à une certaine distance du châssis. Ces deux entretoises sont disposées dans le plan vertical médian de la rampe. Le dispositif de suspension comporte deux autres entretoises équipées d'amortisseur. Elles sont disposées à une certaine distance de part et d'autre du plan vertical médian. Ces entretoises avec amortisseur ont principalement pour rôle d'absorber les oscillations autour d'un axe de rotation vertical de la rampe. Elles permettent, en complément des deux entretoises horizontales, de positionner le cadre central de la rampe par rapport au châssis. Les deux entretoises équipées d'amortisseur ne présentent pas strictement la même longueur. Le positionnement de la rampe dans un plan vertical perpendiculaire à la direction d'avance n'est donc pas précis. Par ailleurs, avec quatre entretoises entre le cadre central et le châssis, la liaison est hyperstatique. Le positionnement parallèle de la rampe par rapport au châssis avec ces quatre entretoises ne peut être obtenu avec précision compte tenu des deux bielles de longueur variable. D'autre part, un bras latéral de la rampe peut entrer en contact avec le châssis ou un élément quelconque de l'appareil de pulvérisation lors du repliage de la rampe pour le transport entraînant une détérioration et donc des coûts d'entretien.

Le but de la présente invention est de remédier aux inconvénients de l'état de la technique connu tout en veillant à obtenir une construction simple et fiable du dispositif de suspension.

Un autre objet de la présente invention est de proposer un dispositif de suspension apte à amortir les mouvements de roulis et/ou les mouvements de lacet de la rampe de pulvérisation.

A cet effet une importante caractéristique de l'invention consiste en ce que ledit dispositif de suspension comporte seulement trois entretoises pour maintenir ladite rampe parallèle par rapport audit châssis, chaque entretoise est liée au cadre central au moyen respectivement d'une première, d'une troisième et d'une cinquième articulation, l'axe de rotation de la rampe passant par la première articulation et par la troisième ou la cinquième articulation est incliné. L'emploi d'uniquement trois entretoises permet d'obtenir un positionnement idéal de la rampe par rapport au châssis, et donc d'éviter des interférences lors du repliage de la rampe avec le châssis. Cette liaison isostatique entre la rampe et le châssis permet aussi d'assurer un épandage optimal du produit.

Suivant une réalisation avantageuse de l'invention, le dispositif de suspension intègre un mécanisme de correction de dévers de la rampe de pulvérisation. La rampe peut ainsi être inclinée lors d'un déplacement de l'appareil d'épandage sur un terrain en dévers.

D'autres caractéristiques et avantages ressortiront des revendications et de la description ci-après d'un exemple de réalisation non limitatif de l'invention avec référence aux dessins annexés dans lesquels :
- la **figure 1** représente une vue générale d'une machine équipée du dispositif de suspension selon l'invention,
- la **figure 2** représente une vue arrière d'un dispositif de suspension,
- la **figure 3** représente une vue de dessus d'un dispositif de suspension,
- la **figure 4** représente une vue isométrique d'un dispositif de suspension,
- la **figure 5** représente une coupe partielle selon V de la figure 2 à une autre échelle.

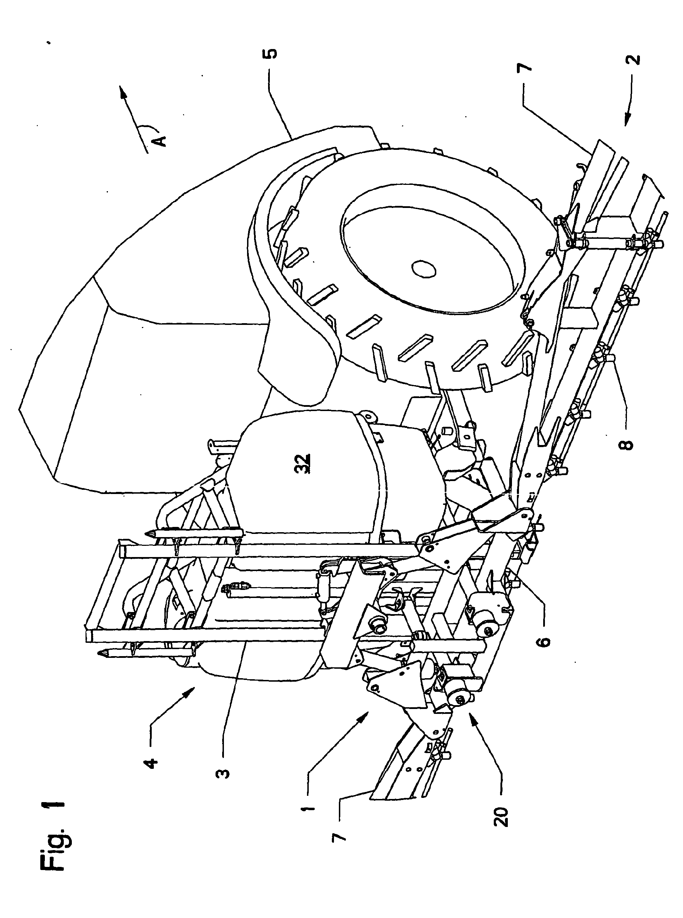

La figure 1 représente un exemple de réalisation d'un dispositif de suspension (1) conforme à l'invention. Le dispositif de suspension (1) permet notamment de suspendre et d'orienter une rampe de pulvérisation (2). La rampe (2) est destinée à être suspendue au châssis (3) à l'arrière d'un appareil agricole (4). La rampe (2) est notamment destinée à épandre, le plus uniformément possible, des engrais ou des produits de traitement du type phytosanitaires sur le sol ou sur des cultures. Ladite rampe (2) n'est montrée que partiellement sur cette figure. Lors des déplacements de l'appareil de pulvérisation (4) dans un champ, les rampes (2) sont soumises à des sollicitations qui sont limitées par le dispositif de suspension (1). Le dispositif de suspension (1) a pour rôle d'absorber et d'atténuer les mouvements du tracteur (5) pour éviter leur transmission directe à la rampe (2).

D'une manière connue de l'homme de l'art, ladite rampe (2) présente un cadre central (6) et au moins un bras latéral (7) destiné à supporter des moyens de pulvérisation (8) pour épandre des produits sur le sol. Dans l'exemple de réalisation, la rampe (2) comprend deux bras latéraux (7) articulés sur ledit cadre central (6) et disposés symétriquement par rapport au plan vertical médian (P) de la rampe (2). Les bras latéraux (7) sont liés de part et d'autre dudit cadre central (6) et forment la rampe de pulvérisation (2).

Avec l'évolution de la technique agricole les agriculteurs utilisent, de plus en plus, des appareils de pulvérisation (4) présentant une largeur de travail toujours plus grande. En pratique, ce sont les longueurs des rampes (2) qui augmentent. La tendance est aussi de travailler à des vitesses toujours plus élevées. Plus on évolue vite, plus les risques sont grands de déformer ou de briser des pièces de l'appareil agricole (4) sous l'action de contraintes trop élevées. L'accroissement de la vitesse de travail et les dimensions relativement importantes de ces rampes (2) imposent une construction solide et un dispositif de suspension (1) adéquat au châssis (3) de l'appareil d'épandage (4) porté, tracté ou automoteur. Un dispositif de suspension (1) est donc primordial pour une rampe de pulvérisation (2) afin de prévenir toute détérioration qui engendre des pertes de temps et des frais d'entretien pouvant être élevés.

L'appareil agricole de pulvérisation (4) est déplacé par le tracteur (5) suivant une direction et un sens d'avance indiqué par la flèche (A). Dans la suite de la description, les notions "avant" et "arrière", "devant" et "derrière" sont définies par rapport au sens d'avance (A) et les notions "droite" et "gauche" sont définies en regardant cet appareil (4) de l'arrière dans ledit sens d'avance (A).

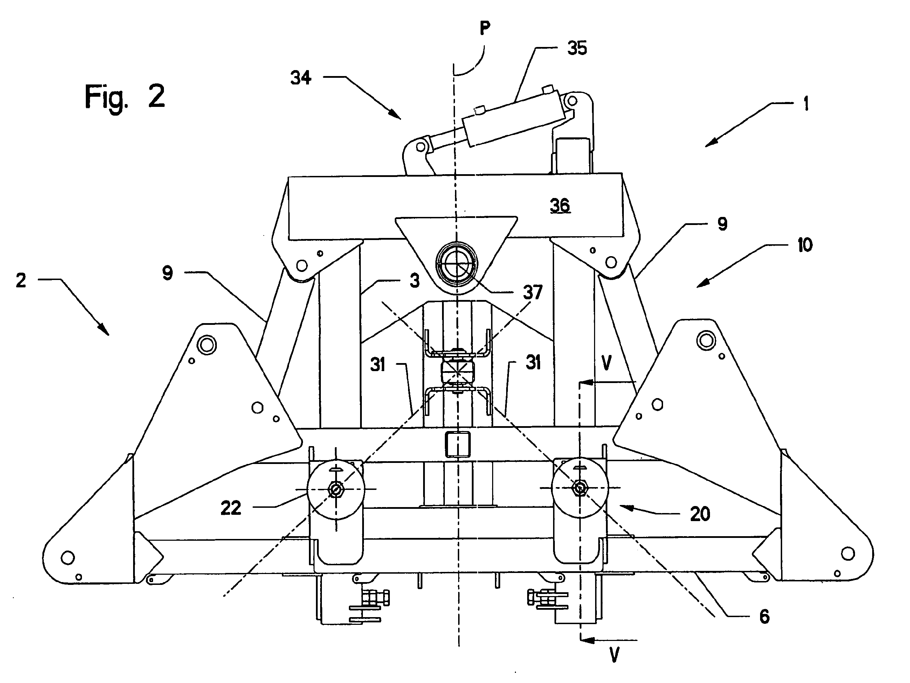

Dans l'exemple de réalisation représenté sur les figures, le dispositif de suspension (1) est du type « à trapèze déformable ». Ce dernier comporte ainsi deux bielles (9) permettant de suspendre ledit cadre central (6) audit châssis (3). Les deux bielles (9) sont dirigées essentiellement verticalement. Elles présentent une longueur identique et leurs extrémités supérieures sont convergentes. D'après la figure 2, les deux bielles (9) sont donc inclinées et constituent avec le cadre central (6) un quadrilatère du type trapèze (10). La rampe (2) est suspendue par gravité audit châssis (3). Au passage d'une ornière, par exemple, la déformation du trapèze (10), par rotation des bielles (9) sur leur point d'articulation au châssis (3), maintient sensiblement l'horizontalité de la rampe (2). La déformation du trapèze (10) évite aussi à une extrémité de la rampe (2) d'entrer en contact avec le sol et donc de prévenir une altération de la rampe (2) et par conséquent de prévenir des frais d'entretien et de réparation. De part la suspension de ces bielles (9) au châssis (3), le mouvement de roulis de la rampe (2) par rapport à un axe longitudinal disposé dans la direction d'avance (A) peut être absorbé.

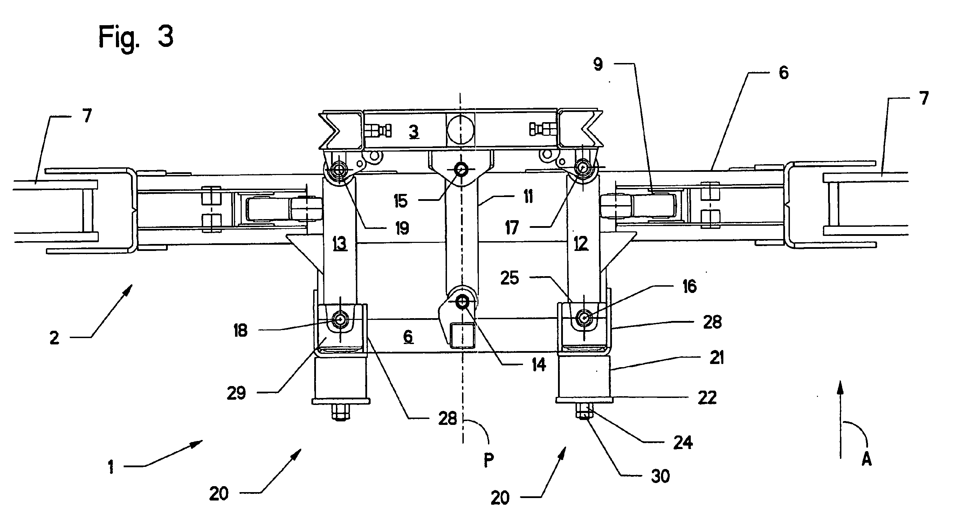

Selon une caractéristique importante de l'invention, le dispositif de suspension (1) comporte seulement trois entretoises (11) (12) (13). Lesdites entretoises (11) (12) (13) ont pour fonction de maintenir le cadre central (6) parallèlement au châssis (3) et à une certaine distance de celui-ci. L'emploi d'uniquement trois entretoises (11) (12) (13) entre le châssis (3) et le cadre central (6) réalise une liaison isostatique. La liaison est donc simple mais surtout stable. La longueur des trois entretoises (11) (12) (13) définit la position de la rampe (2) par rapport au châssis (3). La rampe (2) est disposée dans un plan sensiblement vertical perpendiculaire à la direction d'avance (A). D'après la figure 3, une première entretoise (11) relie le cadre central (6) de la rampe (2) audit châssis (3) au moyen d'une première et d'une deuxième articulation (14, 15). Elle est disposée dans le plan vertical médian (P) de la rampe (2) et est essentiellement dirigée dans la direction d'avance (A).

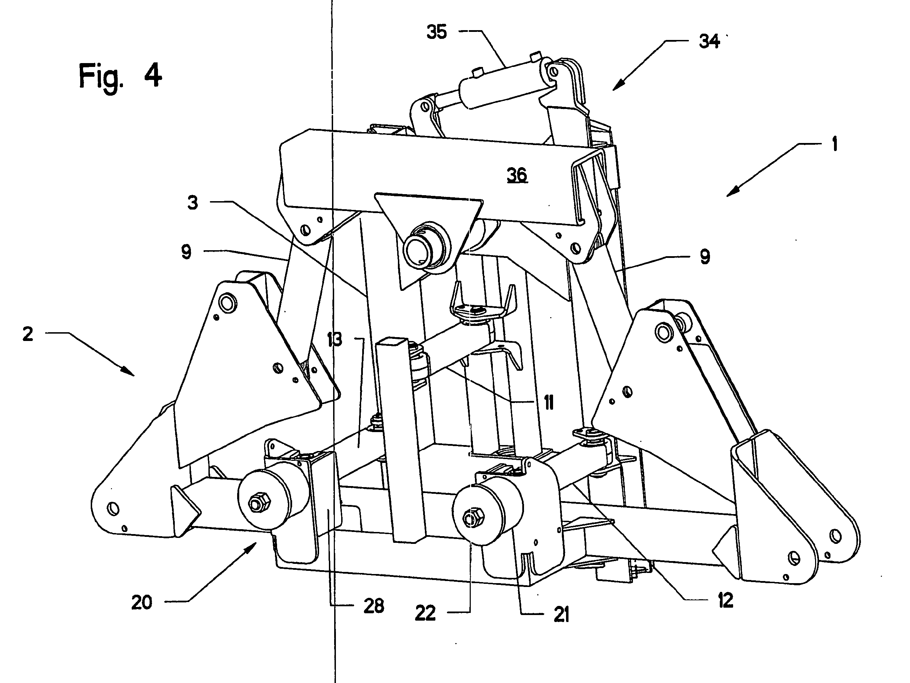

Selon une réalisation préférentielle de l'invention représentée aux figures 3 et 4, les deuxième et troisième entretoises (12, 13) sont disposées de part et d'autre de ladite première entretoise (11). Elles sont avantageusement symétriques par rapport à la première entretoise (11) et donc par rapport au plan vertical médian (P). On remarque que les deuxième et troisième entretoises (12, 13) sont disposées dans un plan horizontal différent de celui de la première entretoise (11). La première entretoise (11) est disposée au-dessus des deuxième et troisième entretoises (12, 13). D'une manière préférentielle, les deux entretoises (12, 13) sont disposées dans le même plan horizontal et sont identiques en longueur. La deuxième entretoise (12) est liée au cadre central (6) via une troisième articulation (16) et audit châssis (3) au moyen d'une quatrième articulation (17). La troisième entretoise (13) est, pour sa part, liée au cadre central (6) via une cinquième articulation (18) et audit châssis (3) au moyen d'une sixième articulation (19). Les articulations (14 à 19) sont des articulations sphériques permettant au cadre central (6) de prendre des positions relatives et variées dans l'espace. Les articulations (14 à 19) présentent un axe de pivotement privilégié qui est disposé sensiblement verticalement. D'une manière particulièrement avantageuse, lesdites articulations sont réalisées par un silentbloc. Ainsi, la compensation angulaire dans les deux autres directions, de faible amplitude, est absorbée par le caoutchouc qui se déforme. Les articulations des deux bielles (9) sont également du type sphérique. L'axe de pivotement privilégié des bielles (9) est, par contre, sensiblement horizontal.

L'exemple de réalisation, illustré sur les figures 1 à 5, représente le dispositif de suspension (1) dans sa position d'équilibre lorsqu'il est au repos.

Dans la pratique, la rampe (2) est aussi soumise à des oscillations dans un plan horizontal. Ces oscillations sont un mouvement de rotation de la rampe (2) vers l'avant et vers l'arrière compte tenu de la direction d'avance (A). Ces oscillations verticales sont aussi appelées mouvement de lacet ou fouet de la rampe (2). Elles se produisent notamment lors d'un freinage ou d'une accélération de l'appareil de pulvérisation (4) pour effectuer un virage. D'autre part lors d'un simple déplacement de l'appareil de pulvérisation (4) sur une parcelle, la rampe (2) est également soumise à des accélérations dans un plan horizontal. On constate donc que la quantité de produit dispersée sur le sol est bien inférieure ou très supérieure à la dose prévue aux extrémités de la rampe de pulvérisation agricole (2) dans les courbes lorsque la rampe (2) pivote. Le dispositif de suspension (1) de l'invention doit atténuer ces oscillations entraînant une répartition non homogène du produit de traitement sur les cultures. Le dispositif de suspension (1) comporte, à cet effet, au moins un dispositif amortisseur (20). Un dispositif amortisseur (20) est associé à au moins deux desdites trois entretoises (11, 12, ,13). Le dispositif amortisseur (20) permet d'absorber les oscillations de la rampe de pulvérisation (2) par rapport à un axe de pivotement vertical lors du déplacement de l'appareil de pulvérisation (4) sur un terrain plan selon une trajectoire courbe.

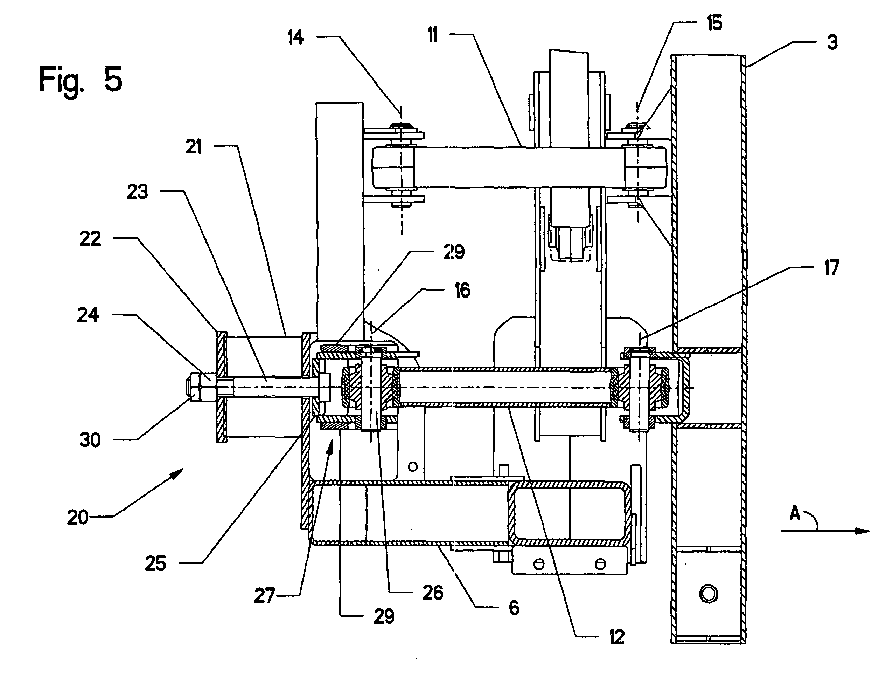

A la lumière de la figure 5, on remarque que le dispositif amortisseur (20) est associé à une chape (25). Ladite chape est liée, d'une part au cadre central (6) par l'intermédiaire d'une vis (23) et d'autre part à l'entretoise correspondante (12 ; 13) au moyen d'une broche (26). Ledit dispositif amortisseur (20) comporte avantageusement un plot élastique (21). Ce plot élastique (21) est solidaire du cadre central (6) par l'intermédiaire de ladite vis (23) et d'un écrou (24). Le plot élastique (21) est plus ou moins précontraint entre le cadre central (6) et une rondelle (22) par le serrage de l'écrou (24). La chape (25) et le plot élastique (21) sont assemblés sur le cadre central (6) au moyen de ladite vis (23) et l'écrou (24). Dans l'exemple de réalisation, un dispositif amortisseur (20) est avantageusement associé à ladite deuxième entretoise (12) et à ladite troisième entretoise (13). Ladite broche (26) est destinée à passer au travers de la troisième ou la cinquième articulation (16 ; 18) pour fixer la deuxième ou la troisième entretoise (12, 13) à la chape correspondante (25).

Lors d'une oscillation de la rampe (2) vers l'avant et/ou vers l'arrière compte tenu de la direction d'avance (A), les deuxième et troisième entretoises (12, 13) disposées de part et d'autre du plan vertical médian (P) ont tendance à vouloir se raccourcir ou se rallonger. Ce phénomène est absorbé par le montage particulier de la chape (25) avec le plot élastique (21). La chape (25) dispose d'un degré de liberté pour se déplacer dans une direction sensiblement parallèle au sens d'avance (A), lorsque le plot élastique (21) se comprime.

En pratique, lorsque le tracteur (5) prend un virage à gauche, le bras latéral (7) gauche de la rampe (2) a tendance à rester immobile alors que le bras latéral (7) droit accélère beaucoup plus vite. Le cadre central (6) a alors tendance à s'éloigner du châssis (3) du côté droit alors qu'à gauche, le cadre central (6) a plutôt tendance à se rapprocher du châssis (3). La deuxième entretoise (12), située du côté droit compte tenu de la direction d'avance (A), travaille ainsi en traction. Elle a tendance à tirer sur la chape correspondante (25) qui s'écarte du cadre central (6) en tirant sur la vis (23). Cette action entraîne la compression du plot élastique correspondant (21) et l'amortissement du mouvement de lacet de la rampe (2). A l'inverse, la troisième entretoise (13), disposée à gauche, travaille en compression et à tendance à pousser sur la chape (25) qui est en butée contre le cadre central (6). Comme cette dernière est en butée contre le cadre central (6), la chape (25) ne peut donc pas comprimer le plot élastique correspondant (21) qui ne travaille donc pas. Lors d'un virage à droite, c'est la troisième entretoise (13) qui travaille en traction et la deuxième entretoise (12) qui travaille en compression. La compression du plot élastique (21) lié à la troisième entretoise (13) permet de compenser les oscillations de la rampe (2).

Dans le mode de réalisation de l'invention représenté sur les figures, le coulissement de la chape (25), lorsque l'entretoise correspondante (12 ; 13) travaille en traction, est guidé par un logement (27) ménagé dans le cadre central (6). Ce logement (27) permet à la chape (25) de coulisser suivant une direction sensiblement parallèle à la direction d'avance (A). Ledit logement (27) est délimité, d'une manière préférentielle, par des guides verticaux et horizontaux (28, 29). Deux guides verticaux (28) limitent la translation de la chape (25) dans une direction perpendiculaire à la direction d'avance (A). Ces guides verticaux (28) sont liés au cadre central (6). Deux guides horizontaux (29) placés l'un en dessous et l'autre au-dessus, limitent le déplacement de la chape (25) dans une direction verticale. Chaque guide horizontal (29) présente une forme particulière en U ouvert. L'ouverture est avantageusement disposée dans la direction d'avance (A). Cette forme ouverte est adaptée à la broche (26) débouchant de part et d'autre de la chape (25). Ainsi la chape (25) peut coulisser librement dans son logement (27). D'une manière préférentielle, ladite broche (26) est sécurisée par une goupille élastique.

D'une manière connue de l'homme de l'art, le système vis/écrou (23, 24) permet de comprimer le plot élastique (21). Pour conserver la précontrainte du plot élastique (21) lors du fonctionnement, l'écrou (24) est sécurisé par un contre-écrou (30). Dans le cas de dispersions géométriques, on peut régler la verticalité de la rampe (2) en insérant des cales entre les chapes (25) et le cadre central (6). Les cales sont de préférence fixées sur le cadre central (6) via des moyens de fixation connus tels que par exemple un boulon. Lesdites cales ne sont pas représentées sur les différentes représentations illustrées par les figures.

Lors des déplacements de l'appareil de pulvérisation (4) dans les champs pour épandre un produit, la rampe (2) est presque toujours soumise à une combinaison de deux mouvements. La rampe (2) est soumise à des sollicitations notamment verticales et horizontales provoquées par un sol irrégulier. Lors des déplacements à des vitesses élevées, ces sollicitations sont encore accentuées. Le dispositif de suspension (1) reliant la rampe (2) audit châssis (3) de l'appareil de pulvérisation (4) permet d'atténuer les mouvements du tracteur (5) transmit à la rampe (2). L'utilisation d'articulations (11 à 19) sphériques permet d'absorber les accélérations verticales consécutivement à un choc ou à un mouvement brusque de la rampe (2). Avec ce dispositif de suspension (1) conforme à l'invention et le dispositif amortisseur (20), on obtient un amortissement optimal et efficace des mouvements de lacet de la rampe (2), la répartition du produit est alors homogène sur toute la surface du champ.

D'après la figure 4, la première entretoise (11) est disposée dans un plan horizontal au-dessus de celui des deuxièmes et troisièmes entretoises (12, 13). Ainsi la première articulation (14) est disposée en amont des troisième et cinquième articulations (16, 18). De part cette disposition particulière, l'axe (31) passant par la première articulation (14) et par la troisième articulation (16) est avantageusement incliné. De même l'axe (31) passant par la première articulation (14) et par la cinquième articulation (18) est aussi incliné. La rampe (2) oscille donc avantageusement autour des axes (31) inclinés représentés sur la figure 2.

Selon une réalisation de l'invention non représentée, il peut être envisagé que chaque entretoise (11) (12) (13) soit disposée dans un plan horizontal différent, la deuxième entretoise (12) est alors disposée dans un plan horizontal différent de celui de la troisième entretoise (13). Dans une autre réalisation de l'invention non représentée, la première entretoise (11) peut également être disposée en dessous des deux autres entretoises (12, 13). D'après une réalisation avantageuse de l'invention, lesdites première, deuxième et troisième entretoises (11)(12)(13) sont strictement identiques.

Dans l'exemple de réalisation représenté, ledit appareil agricole (4) est du type pulvérisateur porté. L'intégralité du poids dudit pulvérisateur est donc supportée par ledit tracteur (5). Pour ce faire, ledit châssis (3) est réalisé de manière à être lié à un attelage trois points dudit tracteur (5).

Ledit pulvérisateur comporte également une cuve (32) destinée à contenir un liquide de traitement. A la lumière de la figure 4, ladite cuve (32) est supportée par ledit châssis (3). D'une manière connue par l'homme de l'art, ledit pulvérisateur comporte encore des moyens pour pomper le liquide de traitement contenu dans ladite cuve (32) et pour l'envoyer sous pression jusqu'auxdits moyens de pulvérisation (8). Ledit liquide de traitement est ainsi déposé en fines gouttelettes sur les plantes ou le sol à traiter. De tels moyens étant largement connus, ils n'ont pas été représentés sur les figures et ils ne seront pas décrits davantage.

Lesdits moyens de pulvérisation (8), par exemple des buses (1), sont fixés sur ladite rampe (2). Lors du travail, ladite rampe (2) s'étend transversalement à ladite direction d'avance (A) et parallèlement au sol. Ainsi à chaque passage, ledit pulvérisateur peut traiter une bande de terrain pouvant atteindre plusieurs dizaines de mètres de large. Lors du transport, ladite rampe (2) est repliée sur elle-même de manière à respecter le gabarit autorisé pour circuler sur la voie publique. D'une manière également connue, la rampe (2) est liée de manière à pouvoir être déplacée par rapport audit châssis (3). Dans l'exemple de réalisation de la figure 1, la rampe (2) est liée de manière coulissante audit châssis (3). Ladite rampe (2) se déplace suivant une direction verticale par rapport au châssis (3) pour adapter la hauteur de pulvérisation notamment à la taille des plantes à traiter.

Le dispositif de suspension (1) décrit est simple et bien adapté au travail sur un sol horizontal mais ne permet pas, en dévers, de maintenir la rampe (2) parallèle au sol. Le parallélisme est obtenu par modification des points d'articulation des deux bielles (9) au moyen d'un mécanisme de correction de dévers (34). Dans l'exemple de réalisation des figures, la correction de dévers de la rampe (2) est donnée par un vérin correcteur de dévers (35). A cet effet, un cadre supérieur (36) est lié audit châssis (3) au moyen d'une articulation (37) d'axe sensiblement horizontal. Ladite articulation horizontale (37) est disposée avantageusement dans le plan vertical médian (P) du dispositif de suspension (1). D'une manière avantageuse, ce cadre supérieur (36) est réalisé sous la forme d'un palonnier. Le centre du palonnier est lié à l'articulation horizontale (37) dudit châssis (3). Chaque extrémité du palonnier est destinée à recevoir une desdites bielles (9). Le vérin correcteur de dévers (35) est d'une part solidaire dudit châssis (3) et d'autre part du cadre supérieur (36). Ledit vérin correcteur de dévers (35) permet d'orienter angulairement ledit cadre central (6) et par conséquent les bras latéraux (7) par rapport au sol. Sur un sol en dévers, le mécanisme de correction de dévers (34) évite le contact de l'extrémité de la rampe (2) avec le sol car la rampe (2) est bloquée ou maintenue parallèle au sol par ledit vérin correcteur de dévers (35).

Un système de blocage du mécanisme de correction de dévers (34) est aussi prévu pour bloquer la rampe (2), en particulier lorsque seulement une moitié de la rampe (2) est dépliée. Dans ce cas, la répartition asymétrique du poids de la rampe (2) nécessite que l'on bloque la rampe (2).

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection tel que défini par les revendications.

Ainsi selon un autre exemple de réalisation non représenté, ladite rampe est liée de manière coulissante, non pas directement audit châssis, mais à une partie mobile.

Selon un autre exemple de réalisation non représenté, ledit pulvérisateur est du type traîné. Dans ce cas, ledit châssis est muni de roues au moyen desquelles ledit pulvérisateur repose au moins partiellement sur le sol.

La présente invention concerne également les pulvérisateurs du type automoteur. Ledit châssis supporte alors un moteur et un poste de pilotage.

## Revendications

1. Dispositif de suspension (1) pour une rampe (2) d'un appareil agricole d'épandage de produits (4) destiné à être monté sur un châssis (3), ledit dispositif de suspension (1) comportant deux bielles (9) permettant de suspendre ladite rampe (2) audit châssis (3), ladite rampe (2) comportant un cadre central (6) sur lequel est lié au moins un bras latéral (7) de rampe (2), ***caractérisé par le fait* que** le dispositif de suspension (1) comporte seulement trois entretoises (11) (12) (13) permettant de maintenir ladite rampe (2) parallèle audit châssis (3), chaque entretoise (11)(12)(13) est liée au cadre central (6) au moyen respectivement d'une première (14), d'une troisième (16) et d'une cinquième articulation (18), l'axe de rotation (31) de la rampe (2) passant par la première articulation (14) et par la troisième (16) ou la cinquième articulation (18) est incliné.

2. Dispositif de suspension selon la revendication 1, ***caractérisé par le fait* que** ledit dispositif de suspension (1) comporte au moins un dispositif amortisseur (20).

3. Dispositif de suspension selon la revendication 1, ***caractérisé par le fait* qu'**un dispositif amortisseur (20) est associé à au moins deux desdites trois entretoises (11) (12) (13).

4. Dispositif de suspension selon la revendication 2 ou 3, ***caractérisé par le fait* que** chaque dispositif amortisseur (20) est associé à une chape (25).

5. Dispositif de suspension selon la revendication 4, ***caractérisé par le fait* que** ladite chape est liée au cadre central (6) via une vis (23) et à l'entretoise respective (11) (12) (13) via une broche (26).

6. Dispositif de suspension selon la revendication 5, ***caractérisé par le fait* que** ledit dispositif amortisseur (20) comporte un plot élastique (21), ledit plot élastique (21) est solidaire dudit cadre central (6) via ladite vis (23).

7. Dispositif de suspension selon la revendication 5, ***caractérisé par le fait* que** lors d'une oscillation de la rampe (2), une desdites entretoises (11) (12) (13) travaille en traction et a tendance à tirer sur ladite chape correspondante (25) et sur ladite vis correspondante (23), ladite chape (25) coulisse dans la direction d'avance (A) et comprime ledit plot élastique respectif (21).

8. Dispositif de suspension selon l'une quelconque des revendications 1 à 7, ***caractérisé par le fait* qu'**une première entretoise (11) est disposée sensiblement dans un plan vertical médian (P) dudit dispositif de suspension (1) et qu'une deuxième et une troisième entretoises (12, 13) sont disposées de part et d'autre de ladite première entretoise (11), ladite première entretoise (11) est disposée dans un plan horizontal différent de celui des deux autres entretoises (12, 13).

9. Dispositif de suspension selon la revendication 8, ***caractérisé par le fait* que** ladite deuxième entretoise (12) et ladite troisième entretoise (13) sont liées au cadre central (6) par l'intermédiaire d'un dispositif d'amortissement (20).

10. Appareil agricole d'épandage de produits pourvu d'un châssis, d'une rampe d'épandage desdits produits et d'un dispositif de suspension pour relier ladite rampe d'épandage audit châssis, ***caractérisé par le fait* que** ledit dispositif de suspension (1) est un dispositif conforme à l'une quelconque des revendications 1 à 9.

## Claims

1. Suspension device (1) for a boom (2) of an agricultural implement for spreading products (4) intended to be mounted on a chassis (3), the said suspension device (1) comprising two rods (9) making it possible to suspend the said boom (2) on the said chassis (3), the said boom (2) comprising a central frame (6) on which is connected at least one lateral boom (2) arm (7), ***characterized in* that** the suspension device (1) comprises only three braces (11) (12) (13) making it possible to maintain the said boom (2) parallel to the said chassis (3), each brace (11) (12) (13) is connected to the central frame (6) by means respectively of a first (14), a third (16) and a fifth (18) articulation, the axis of rotation (31) of the boom (2) passing by the first articulation (14) and by the third (16) or the fifth articulation (18) is inclined.

2. Suspension device according to claim 1, ***characterized in* that** the said suspension device (1) comprises at least one shock absorber device (20).

3. Suspension device according to claim 1, ***characterized in* that** a shock absorber device (20) is associated with at least two of the said three braces (11) (12) (13).

4. Suspension device according to claim 2 or 3, ***characterized in* that** each shock absorber device (20) is associated with a cover (25).

5. Suspension device according to claim 4, ***characterized in* that** the said cover is connected to the central frame (6) via a screw (23) and to the respective brace (11) (12) (13) via a pin (26).

6. Suspension device according to claim 5, ***characterized in* that** the said shock absorber device (20) comprises an elastic contact-stud (21), the said elastic contact-stud (21) is rigidly fastened to the said central frame (6) via the said screw (23).

7. Suspension device according to claim 5, ***characterized in* that** during an oscillation of the boom (2), one of the said braces (11) (12) (13) works in traction and tends to pull on the said corresponding cover (25) and on the said corresponding screw (23), the said cover (25) slides in the forward direction (A) and compresses the said respective elastic contact-stud (21).

8. Suspension device according to any one of claims 1 to 7, ***characterized in* that** a first brace (11) is arranged substantially in a median vertical plane (P) of the said suspension device (1) and that a second and a third brace (12, 13) are arranged on either side of the said first brace (11), the said first brace (11) is arranged in a different horizontal plane from that of the other two braces (12, 13).

9. Suspension device according to claim 8, ***characterized in* that** the said second brace (12) and the said third brace (13) are connected to the central frame (6) through a shock absorber device (20).

10. Agricultural implement for spreading products equipped with a chassis, a boom for spreading the said products and a suspension device to connect the said spreading boom to the said chassis, ***characterized in* that** the said suspension device (1) is a device according to any one of claims 1 to 9.

## Patentansprüche

1. Aufhängevorrichtung (1) für eine Rampe (2) einer landwirtschaftlichen Maschine zur Ausbreitung von Produkten (4), die dazu bestimmt ist, auf einem Rahmen (3) montiert zu werden, wobei die Aufhängevorrichtung (1) zwei Stangen (9) umfasst, die es ermöglichen, die Rampe (2) am Rahmen (3) aufzuhängen, wobei die Rampe (2) einen Mittelrahmen (6) umfasst, mit dem mindestens ein seitlicher Arm (7) der Rampe (2) verbunden ist, ***dadurch gekennzeichnet,* dass** die Aufhängevorrichtung (1) nur drei Querstreben (11) (12) (13) umfasst, die es ermöglichen, die Rampe (2) parallel zum Rahmen (3) zu halten, wobei jede Querstrebe (11) (12) (13) mit dem Mittelrahmen (6) mittels eines ersten (14), eines dritten (16) bzw. eines fünften Gelenks (18) verbunden ist, wobei die Drehachse (31) der Rampe (2), die durch das erste Gelenk (14) und durch das dritte (16) oder das fünfte Gelenk (18) verläuft, geneigt ist.

2. Aufhängevorrichtung nach Anspruch 1, ***dadurch gekennzeichnet,* dass** die Aufhängevorrichtung (1) mindestens eine Dämpfungsvorrichtung (20) umfasst.

3. Aufhängevorrichtung nach Anspruch 1, ***dadurch gekennzeichnet,* dass** eine Dämpfungsvorrichtung (20) mit mindestens zwei der drei Querstreben (11) (12) (13) verbunden ist.

4. Aufhängevorrichtung nach Anspruch 2 oder 3, ***dadurch gekennzeichnet,* dass** jede Dämpfungsvorrichtung (20) mit einer Abdeckung (25) verbunden ist.

5. Aufhängevorrichtung nach Anspruch 4, ***dadurch gekennzeichnet,* dass** die Abdeckung mit dem Mittelrahmen (6) über eine Schraube (23) und mit der jeweiligen Querstrebe (11) (12) (13) über eine Spindel (26) verbunden ist.

6. Aufhängevorrichtung nach Anspruch 5, ***dadurch gekennzeichnet,* dass** die Dämpfungsvorrichtung (20) ein elastisches Stück (21) umfasst, wobei das elastische Stück (21) mit dem Mittelrahmen (6) über die Schraube (23) fest verbunden ist.

7. Aufhängevorrichtung nach Anspruch 5, ***dadurch gekennzeichnet,* dass** bei einer Schwingung der Rampe (2) eine der Querstreben (11) (12) (13) mit Zug arbeitet und dazu neigt, an der entsprechenden Abdeckung (25) und an der entsprechenden Schraube (23) zu ziehen, wobei die Abdeckung (25) in Vorschubrichtung (A) gleitet und das jeweilige elastische Stück (21) zusammendrückt.

8. Aufhängevorrichtung nach irgend einem der Ansprüche 1 bis 7, ***dadurch gekennzeichnet,* dass** eine erste Querstrebe (11) im Wesentlichen in einer vertikalen Mittelebene (P) der Aufhängevorrichtung (1) angeordnet ist, und dass eine zweite und eine dritte Querstrebe (12, 13) beiderseits der ersten Querstrebe (11) angeordnet sind, wobei die erste Querstrebe (11) in einer anderen Horizontalebene als die beiden anderen Querstreben (12, 13) angeordnet ist.

9. Aufhängevorrichtung nach Anspruch 8, ***dadurch gekennzeichnet,* dass** die zweite Querstrebe (12) und die dritte Querstrebe (13) mit dem Mittelrahmen (6) über eine Dämpfungsvorrichtung (20) verbunden sind.

10. Landwirtschaftliche Maschine zur Ausbreitung von Produkten mit einem Rahmen, einer Rampe zur Ausbreitung der Produkte und einer Aufhängevorrichtung, um die Ausbreitungsrampe mit dem Rahmen zu verbinden, ***dadurch gekennzeichnet,* dass** die Aufhängevorrichtung (1) eine Vorrichtung nach irgend einem der Ansprüche 1 bis 9 ist.
